# EUROPÄISCHE PATENTSCHRIFT

(11) **EP 1 975 510 B1**
(45) Veröffentlichungstag und Bekanntmachung des Hinweises auf die Patenterteilung: **06.07.2016**
(21) Anmeldenummer: 08004600.6
(22) Anmeldetag: 12.03.2008
(51) Int. Cl.: B60H 1/22, F23N 1/02

(54) **Brennstoffbetriebenes Heizsystem, insbesondere für ein Fahrzeug**
Fuel-powered heating system, in particular for a vehicle
Système de chauffage fonctionnant au carburant, en particulier pour un véhicule

(30) Priorität: 28.03.2007 DE 102007014966
(43) Veröffentlichungstag der Anmeldung: 01.10.2008
(73) Patentinhaber: Eberspächer Climate Control Systems GmbH & Co. KG, 73730 Esslingen (DE)
(72) Erfinder: Eberspach, Günter, 72649 Wolfschlugen (DE)
(74) Vertreter: RLTG

(56) Entgegenhaltungen:
- EP-A2- 1 843 096
- DE-A1- 10 143 459
- DE-C1- 10 125 588

## Beschreibung

Die vorliegende Erfindung betrifft ein brennstoffbetriebenes Heizsystem, wie es beispielsweise als Standheizung oder Zuheizer in einem Fahrzeug eingesetzt werden kann. Ein derartiges Heizsystem weist im Allgemeinen einen Brennerbereich mit einer Brennkammer auf, in welche Verbrennungsluft und Brennstoff eingespeist werden, um ein verbrennbares Gemisch aus Verbrennungsluft und Brennstoff zu generieren. Die eingespeiste Brennstoffzuführmenge und die entsprechend eingespeiste Verbrennungsluftzuführmenge werden in Abhängigkeit davon ausgewählt, mit welcher Heizleistung ein derartiges System betrieben werden soll.

Aus ökologischen Gründen werden zunehmend dem auch zum Betreiben eines Fahrzeugs eingesetzten Brennstoff, also beispielsweise Benzin, Zuschläge beigemengt. Vor allem die Beimengung von Ethanol findet zunehmend Anwendung. Auch abhängig von der Jahreszeit bzw. von den Umgebungstemperaturen variiert der Beimengungsgehalt von 0% Ethanolanteil bis zu beispielsweise 85% Ethanolanteil in dem so genannten E85-Kraftstoff. Ein aus dieser Beimengung von Ethanol resultierendes Problem liegt darin, dass, bezogen auf eine fest vorgegebene Fördermenge des flüssigen Brennstoffs, Ethanol zur vollständigen Verbrennung eine geringere Luft- bzw. Sauerstoffmenge benötigt, als beispielsweise Benzin oder andere fossile Brennstoffe. Gleichzeitig ist die Energieausbeute aus einer vorgegebenen Menge geringer, als wenn reines Benzin verwendet wird. Da bei derartigen Heizsystemen die Brennstoffzuführanordnugen im Allgemeinen mengenbezogen arbeiten, also beispielsweise Dosierpumpen zur Bereitstellung einer bestimmten Brennstoffmenge mit einer bestimmten Förderfrequenz arbeiten, führt die Beimengung von Ethanol zu Benzin einerseits zu einem mageren Gemisch, da nicht der vollständige mit der Verbrennungsluft eingespeiste Brennstoff verbrennt werden kann, und führt andererseits zu einer bezogen auf die geförderte Brennstoffmenge zu geringen Energieausbeute bzw. Heizleistung.

Aus der nachveröffentlichten EP 1 843 096 A2 ist es bekannt, durch Beobachtung einer mit der ablaufenden Verbrennung in Zusammenhang stehenden Temperaturgröße, wie z.B. die Temperatur des in einem Wärmetauscher erwärmten Mediums oder die Temperatur der Verbrennungsabgase, einen Rückschluss auf die Qualität der ablaufenden Verbrennung und mithin den eingesetzten Brennstoff zu ziehen. Liegt dann, wenn andere Faktoren auf einen korrekten Betrieb des Systems hindeuten, die beobachtete Temperaturgröße nicht in einem dafür vorgegebenen Bereich, wird versucht, dies durch Anpassung der zugeführten Brennstoffmenge zu erreichen.

Die DE 101 43 459 A1 und die DE 101 25 588 C1 offenbaren die Berücksichtigung der Qualität des geförderten Brennstoffs beim Betrieb eines Fahrzeugheizgerätes. Auf die Qualität des Brennstoffs wird mittelbar durch die Auswertung des Ausgangssignals eines Klopfsensors an einem Fahrzeugmotor geschlossen.

Es ist die Aufgabe der vorliegenden Erfindung, ein brennstoffbetriebenes Heizsystem und ein Verfahren zum Betreiben desselben vorzusehen, mit welchen durch die Beimengung von Ethanol generierte Betriebsbeeinträchtigungen vermieden werden können.

Gemäß einem ersten Aspekt der vorliegenden Erfindung wird diese Aufgabe gelöst durch ein brennstoffbetriebenes Heizsystem, insbesondere für ein Fahrzeug, umfassend einen Brennerbereich, eine Verbrennungsluftzuführanordnung zum Zuführen von Verbrennungsluft zu dem Brennerbereich, eine Brennstoffzuführanordnung zum Zuführen von Brennstoff zu dem Brennerbereich, wobei die Verbrennungsluftzuführanordnung und die Brennstoffzuführanordnung unter Ansteuerung einer Ansteuervorrichtung stehen, eine Ethanolgehalt-Erfassungsanordnung zur Erzeugung von den Ethanolgehalt in dem Brennstoff repräsentierender Information für die Ansteuervorrichtung, wobei die Ansteuervorrichtung dazu ausgebildet ist, die durch die Brennstoffzuführanordnung zu dem Brennerbereich geförderte Brennstoffmenge in Abhängigkeit von der Information anzupassen.

Erfindungsgemäß ist ferner vorgesehen, dass die Ethanolgehalt-Erfassungsanordnung einen den Ethanolgehalt im Brennstoff vor dessen Einspeisung in den Brennerbereich erfassenden Ethanolsensor umfasst.

Bei diesem brennstoffbetriebenen Heizsystem wird also die Tatsache, dass der dem Brennerbereich zugeführte Brennstoff neben einem fossilen Anteil, wie z. B. Benzin, auch Ethanol enthält, durch entsprechende Anpassung der Brennstofffördermenge berücksichtigt. Aufgrund der Bereitstellung der den Ethanolgehalt repräsentierenden Information können auch über die Betriebszeit hinweg auftretende Veränderungen im Ethanolgehalt berücksichtigt werden.

Bei einem besonders vorteilhaften Aspekt wird weiter vorgeschlagen, dass ein Erfassungssignal des Ethanolsensors in eine zu der Ansteuervorrichtung führende Diagnoseleitung eingespeist wird. Auf diese Art und Weise wird es möglich, herkömmliche Ansteuervorrichtungen ohne zusätzliche bauliche Veränderungen, wie z. B. dem Bereitstellen eines zusätzlichen Anschlusses für einen derartigen Sensor, einzusetzen.

Gemäß einem weiteren Aspekt wird die eingangs genannte Aufgabe gelöst durch ein Verfahren zum Betreiben eines brennstoffbetriebenen Heizsystems, insbesondere für ein Fahrzeug, umfassend die Maßnahmen:
a) In Zuordnung zu einer bereitzustellenden Heizleistung, Zuführen einer Verbrennungsluftzuführmenge und einer Brennstoffzuführmenge zu einem Brennerbereich,
b) Erzeugen von den Ethanolgehalt in dem zugeführten Brennstoff repräsentierender Information beruhend auf dem Ausgangssignal eines Ethanolsensors,
c) Beruhend auf der Information, Einstellen der Brennstoffzuführmenge in Anpassung an den Ethanolgehalt.

Da Ethanol zur Verbrennung weniger Sauerstoff benötigt, als beispielsweise Benzin, und da bei dieser Verbrennung die Energieausbeute von Ethanol geringer ist, wird weiter vorgeschlagen, dass die Brennstoffzuführmenge bei höherem Ethanolgehalt höher eingestellt wird, als bei geringerem Ethanolgehalt.

Die vorliegende Erfindung wird nachfolgend mit Bezug auf die beiliegenden Figuren detailliert erläutert. Es zeigt:
- Fig. 1: eine prinzipartige Darstellung eines Fahrzeugheizsystems;
- Fig. 2: ein Diagramm, welches die Berücksichtigung des prozentualen Ethanolanteils in dem geförderten Brennstoff veranschaulicht.

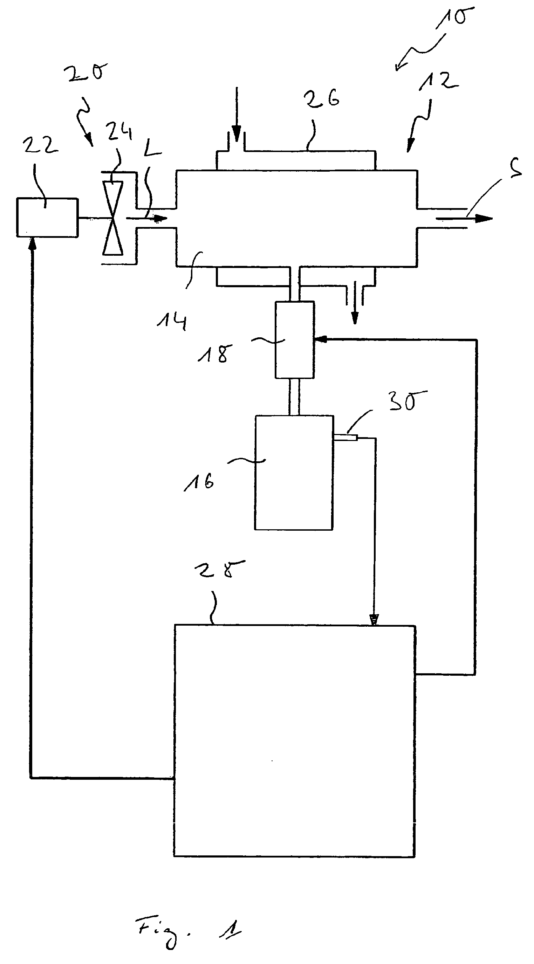

In Fig. 1 ist ein Fahrzeugheizsystem allgemein mit 10 bezeichnet. Dieses Fahrzeugheizsystem umfasst einen Brennerbereich 12 mit einer Brennkammer 14. In diese Brennkammer 14 wird Brennstoff aus einem Brennstoffreservoir 16 vermittels einer Brennstoffzuführanordnung 18, beispielsweise einer getaktet arbeitenden Dosierpumpe, eingespeist. Eine Verbrennungsluftzuführanordnung 20 umfasst einen Antriebsmotor 22 und ein Förderrad 24 und dient dazu, durch einen Pfeil L repräsentierte Verbrennungsluft in die Brennkammer 14 des Brennerbereichs 12 einzuspeisen. Im Brennerbereich 12 wird dann ein Gemisch aus Brennstoff, der beispielsweise durch ein poröses Verdampfermedium in die Dampfphase überführt worden ist, und Verbrennungsluft erzeugt und durch ein nicht dargestelltes Zündorgan gezündet. Die bei der Verbrennung entstehenden heißen Verbrennungsabgase strömen entlang eines Wärmetauscherbereichs 26 und übertragen dort zumindest einen Teil der Verbrennungswärme auf ein zu erwärmendes Medium, bevor sie als Abgasstrom S den Brennerbereich 12 verlassen.

Eine Ansteuervorrichtung 28 steuert bzw. regelt den Betrieb der Brennstoffzuführanordnung 18 und der Verbrennungsluftzuführanordnung 20. Hierzu kann die Ansteuervorrichtung 28 verschiedene Eingangssignale empfangen, wie z. B. ein die Umgebungstemperatur repräsentierendes Signal, ein die Temperatur in einem Fahrzeuginnenraum repräsentierendes Signal und dergleichen. Beruhend auf diesen Informationen bzw. auch dem Befehl, den Verbrennungsbetrieb zu starten bzw. durchzuführen, steuert die Ansteuervorrichtung 28 verschiedene Systembereiche, insbesondere die Brennstoffzuführanordnung 18 und die Verbrennungsluftzuführanordnung 20 an, um im Brennerbereich 12 die für jeweilige Umgebungsbedingungen erforderliche Heizleistung bereitzustellen. Hier kann beispielsweise in einem Kennfeld oder in tabellenartiger Form jeweils ein Wertepaar aus für eine bestimmte erforderliche Heizleistung bzw. eine bestimmte einzustellende Heizstufe zu fördernder Brennstoffzuführmenge und zu fördernder Verbrennungsluftzuführmenge bereitgestellt werden.

Bei dem erfindungsgemäßen Heizsystem 10 ist ferner ein Ethanolsensor 30 vorgesehen. Dieser erfasst den Ethanolgehalt in dem zum Brennerbereich 12 bzw. in die Brennkammer 14 zu speisenden flüssigen Brennstoff. Wie in der Fig. 1 erkennbar, kann dieser Ethanolsensor 30 im Bereich des Brennstoffreservoirs 16 angeordnet sein, kann jedoch auch in irgend einem Leitungsbereich zwischen dem Brennstoffreservoir 16 und dem Brennerbereich 12 positioniert sein. Das Ausgangssignal des Ethanolsensors 30 repräsentiert den Ethanolgehalt bzw. Ethanolanteil in dem Brennstoff und wird zur Ansteuervorrichtung 28 gespeist. Da derartige Ansteuervorrichtungen 28 oftmals keine separaten Steckanschlüsse oder dergleichen zur Verbindung mit einem derartigen externen, zusätzlichen Sensor aufweisen, kann beispielsweise das Ausgangssignal des Ethanolsensors 30 nicht direkt in die Ansteuervorrichtung 28, sondern in eine Diagnoseleitung eingespeist werden, die die Ansteuervorrichtung 28 beispielsweise mit einer im Fahrzeug vorgesehenen Bedieneinheit verbindet.

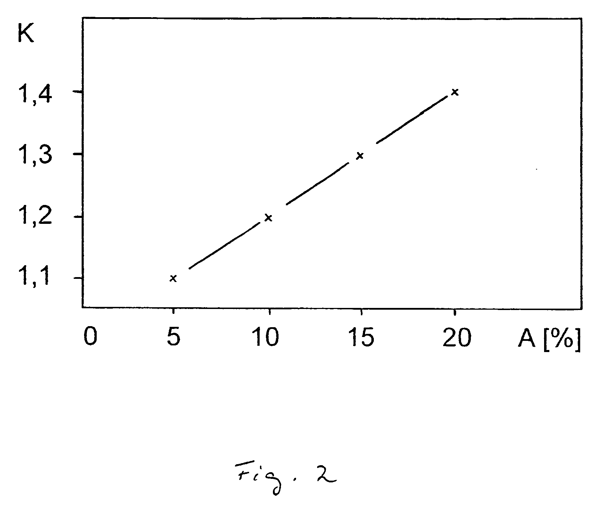

In der Ansteuervorrichtung 28 kann die den Ethanolgehalt repräsentierende Information dann berücksichtigt werden, um durch Anpassung der durch die Brennstoffzuführanordnung 18 geförderten Brennstoffzuführmenge dafür zu sorgen, dass bei der im Brennerbereich 12 ablaufenden Verbrennung tatsächlich auch die für eine jeweilige Heizleistungsstufe vorgegebene Heizleistung bereitgestellt wird. Die Fig. 2 zeigt ein Beispiel für den Zusammenhang eines Korrekturfaktors K mit dem Ethanolgehalt A im Brennstoff. Mit zunehmendem Ethanolgehalt steigt auch der Korrekturfaktor an, wobei zu betonen ist, dass hier lediglich ein qualitativer Zusammenhang veranschaulicht ist, bei dem die gewählten Zahlenwerte nur beliebig ausgewählte Beispiele sind. Von Bedeutung ist jedoch generell, dass mit zunehmendem Ethanolgehalt auch der Korrekturfaktor ansteigt, mit welchem die beispielsweise für einen ethanolfreien Brennstoff vorgegebene Brennstoffzuführmenge bzw. Förderfrequenz multipliziert wird. Dies bedeutet also beispielsweise, dass bei einem Ethanolgehalt von 20% in dem eingespeisten Brennstoff die für einen ethanolfreien Brennstoff und eine bestimmte Heizleistung vorgegebene Brennstoffzuführmenge mit dem Faktor 1,4 multipliziert wird.

Mit zunehmendem Ethanolgehalt steigt also die eingespeiste Brennstoffzuführmenge, während eine entsprechende Anpassung bei der Verbrennungsluftzuführmenge nicht stattfindet. Es wird auf diese Art und Weise dafür gesorgt, dass auch bei Beimengung von Ethanol eine im Wesentlichen vollständige Umsetzung des eingespeisten Sauerstoffs erfolgen kann, also keine Abmagerung des Gemisches erzeugt wird. Hier ist zu berücksichtigen, dass bei gleicher eingespeister Menge Ethanol bzw. einen höheren Ethanolgehalt aufweisender Brennstoff eine geringere Sauerstoffmenge zur vollständigen Verbrennung benötigt, als dies bei ethanolfreiem Brennstoff der Fall ist. Gleichzeitig wird jedoch bei der Verbrennung von Ethanol weniger Energie freigesetzt, so dass durch die Erhöhung der Brennstoffzuführmenge bei höherem Ethanolgehalt nicht nur für eine vollständige Umsetzung des Sauerstoffs gesorgt werden kann, sondern gleichzeitig auch noch die geringere Energieausbeute bei der Verbrennung von Ethanol bzw. ethanolhaltigem Brennstoff im Vergleich zu ethanolfreiem Brennstoff kompensiert werden kann.

Da derartige Heizsysteme im Allgemeinen in mehreren verschiedenen Heizleistungsstufen zu betreiben sind, ist es möglich, in Zuordnung zu jeder auszuwählenden Heizleistungsstufe einen entsprechenden Korrekturzusammenhang bereitzustellen. Auch kann beispielsweise ein Kennfeld generiert werden, in welchem beispielsweise der Ethanolgehalt einerseits und die geforderte Heizleistung andererseits die Eingangsgrößen sind und der Korrekturfaktor der dem Kennfeld dann zu entnehmende Ausgangswert ist. Selbstverständlich ist es auch möglich, die Korrektur in anderer Art und Weise vorzunehmen. So kann beispielsweise anstelle eines Korrekturfaktors auch eine in Abhängigkeit von dem Ethanolgehalt jeweils einzuspeisende Brennstoffmenge der Förderfrequenz als Ausgangsgröße genutzt werden.

Weiter sei darauf hingewiesen, dass der Einsatz eines Ethanolsensors 30, wie er in der Fig. 1 gezeigt ist, zu einer besonders einfachen Bereitstellung von Information über den Ethanolgehalt führt, die selbstverständlich auch genutzt werden kann, um den Betrieb einer Brennkraftmaschine eines Fahrzeugs an veränderte Kraftstoffbedingungen anzupassen, da im Allgemeinen das Heizsystem einerseits und eine Brennkraftmaschine andererseits aus dem gleichen Brennstoffreservoir gespeist werden. Die bedeutet, dass dann, wenn in einem Fahrzeug ein derartiger Ethanolsensor bereits vorhanden ist, dessen Information, sofern dies hinsichtlich der Informationsübertragung in die Ansteuervorrichtung 28 möglich ist, auch genutzt wird, um die vorangehende Anpassung bei der Brennstoffzuführmenge des Heizsystems 10 vornehmen zu können. Dies wird vor allem dann leicht möglich sein, wenn ein derartiges Heizsystem 10 als Originalausstattung in ein neu aufzubauendes Fahrzeug integriert wird. Bei Nachrüstsystemen kann es erforderlich sein, für das Heizsystem 10 zusätzlich auch noch einen derartigen Ethanolsensor in ein Fahrzeug einzubauen.

Im Betrieb einer Brennkraftmaschine kann Information über den Ethanolgehalt im Brennstoff auch durch Auswertung des von einer im Abgasführungssystem vorhandenen Lambdasonde gelieferten Signals erfolgen. Im Allgemeinen wird bei derartigen Brennkraftmaschinen die Brennstoffzuführmenge derart eingestellt, dass die Verbrennung mit einem Lambdawert von etwa 1 abläuft. Verändert sich die Brennstoffzusammensetzung, führt dies im Rahmen der Lambdaregelung zu einer entsprechend angepassten Brennstoffzuführmenge im Vergleich zu einem ethanolfreien Brennstoff. Diese Anpassung der Brennstoffzuführmenge liefert also Information über den Ethanolgehalt, obgleich tatsächlich keine direkte Messung des Ethanolgehalts erfolgt. Vor allem bei bereits original mit einem derartigen Fahrzeugheizsystem ausgestatteten Fahrzeug besteht also dann die Möglichkeit, das Steuergerät der Brennkraftmaschine informationstechnisch mit der Ansteuervorrichtung 28 zu koppeln, um die aus der Lambdaregelung gewonnene Information über den Ethanolgehalt auch in der Ansteuervorrichtung 28 für den Betrieb des Fahrzeugheizgeräts 10 nutzen zu können.

Abschließend sei darauf hingewiesen, dass die vorliegende Erfindung nicht nur bei in Fahrzeugen eingesetzten Heizsystemen Anwendung finden kann. Auch Gebäudeheizungen, Restgasbrenner oder in Reformersystemen, in welchen durch katalytische Umsetzung wasserstoffhaltiges Reformat für Brennstoffzellen erzeugt wird, eingesetzte Verdampfer bzw. Reformer sind im Sinne der vorliegenden Erfindung als derartige Heizsysteme zu verstehen, wenngleich insbesondere bei einem Reformer nicht notwendigerweise das zur Erzeugung des Reformats bereitgestellte Gemisch aus Brennstoff- bzw. Kohlenwasserstoff und Verbrennungsluft und ggf. Wasser verbrannt wird.

## Patentansprüche

1. Brennstoffbetriebenes Heizsystem, insbesondere für ein Fahrzeug, umfassend einen Brennerbereich (12), eine Verbrennungsluftzuführanordnung (20) zum Zuführen von Verbrennungsluft (L) zu dem Brennerbereich (12), eine Brennstoffzuführanordnung (18) zum Zuführen von Brennstoff zu dem Brennerbereich (12), wobei die Verbrennungsluftzuführanordnung (20) und die Brennstoffzuführanordnung (18) unter der Ansteuerung einer Ansteuervorrichtung (28) stehen, **gekennzeichnet durch** eine Ethanolgehalt-Erfassungsanordnung (30) zur Erzeugung von den Ethanolgehalt in dem Brennstoff repräsentierender Information für die Ansteuervorrichtung (28), wobei die Ethanolgehalt-Erfassungsanordnung (30) einen den Ethanolgehalt im Brennstoff vor dessen Einspeisung in den Brennerbereich (12) erfassenden Ethanolsensor (30) umfasst, und wobei die Ansteuervorrichtung (28) dazu ausgebildet ist, die **durch** die Brennstoffzuführanordnung (18) zu dem Brennerbereich (12) geförderte Brennstoffmenge in Abhängigkeit von der Information anzupassen.

2. Heizsystem nach Anspruch 1,
**dadurch gekennzeichnet, dass** ein Erfassungssignal des Ethanolsensors (30) in eine zu der Ansteuervorrichtung (28) führende Diagnoseleitung eingespeist wird.

3. Verfahren zum Betreiben eines brennstoffbetriebenen Heizsystems, insbesondere für ein Fahrzeug, umfassend die Maßnahmen:
a) In Zuordnung zu einer bereitzustellenden Heizleistung, Zuführen einer Verbrennungsluftzuführmenge und einer Brennstoffzuführmenge zu einem Brennerbereich (12),
b) Erzeugen von den Ethanolgehalt in dem zugeführten Brennstoff repräsentierender Information beruhend auf dem Ausgangssignal eines Ethanolsensors (30),
c) Beruhend auf der Information, Einstellen der Brennstoffzuführmenge in Anpassung an den Ethanolgehalt.

4. Verfahren nach Anspruch 3,
**dadurch gekennzeichnet, dass** die Brennstoffzuführmenge bei höherem Ethanolgehalt höher eingestellt wird, als bei geringerem Ethanolgehalt.

## Claims

1. Fuel-operated heating system, especially for a vehicle, comprising a burner area (12), a combustion air supply arrangement (20) for supplying combustion air (L) to the burner area (12), a fuel supply arrangement (18) for supplying fuel to the burner area (12), wherein the combustion air supply arrangement (20) and the fuel supply arrangement (18) are controlled by a control device (28), **characterized by** an ethanol content detection arrangement (30) for creating an information representing the ethanol content in the fuel for the control device (28), wherein the ethanol content detection arrangement (30) comprises an ethanol sensor (30) detecting the ethanol content of the fuel prior to its insertion into the burner area (12), and wherein the control device (28) is adapted for adjusting the amount of fuel supplied by the fuel supply arrangement (18) to the burner area (12) depending on said information.

2. Heating system according to claim 1,
**characterized by** a detection signal of the ethanol sensor (30) being entered into a diagnosis line leading to said control device (28).

3. Method for operating a fuel-operated heating system, especially for a vehicle, comprising the following measures:
a) supplying an amount of combustion air and an amount of fuel to a burner area (12) in association to a heating performance to be provided,
b) creating an information representing the ethanol content of the supplied fuel on the basis of the output signal of an ethanol sensor (30),
c) on the basis of said information, adjusting the amount of fuel supplied depending on the ethanol content.

4. Method according to claim 3,
**characterized by** said amount of fuel supplied being larger for a higher ethanol content than for a lower ethanol content.

## Revendications

1. Système de chauffage alimenté en combustible, en particulier pour un véhicule, comprenant une région de brûleur (12), un arrangement d'alimentation en air de combustion (20) pour délivrer de l'air de combustion (L) à la région de brûleur (12), un arrangement d'alimentation en combustible (18) pour délivrer du combustible à la région de brûleur (12), l'arrangement d'alimentation en air de combustion (20) et l'arrangement d'alimentation en combustible (18) étant contrôlés par un dispositif de contrôle (28), **caractérisé par** un arrangement de détection d'éthanol (30) pour générer une information représentant la teneur en éthanol du combustible pour le dispositif de contrôle (28), l'arrangement de détection d'éthanol (30) comprenant un capteur d'éthanol (30) détectant la teneur en éthanol du combustible avant qu'il soit inséré dans la région de brûleur (12), et le dispositif de contrôle (28) étant adapté pour ajuster la quantité de combustible transportée à la région de brûleur (12) par l'arrangement d'alimentation en combustible (18) en fonction de l'information.

2. Système de chauffage selon la revendication 1,
**caractérisé par** un signal de détection du capteur d'éthanol (30) étant entré dans une ligne de diagnostic menant au dispositif de contrôle (28).

3. Méthode pour opérer un système de chauffage alimenté en combustible, en particulier pour un véhicule, comprenant les mesures suivantes:
a) en association avec une puissance de chauffage à prévoir, délivrer une quantité d'air de combustion et une quantité de combustible à une région de brûleur (12),
b) générer une information représentant la teneur en éthanol du combustible en fonction du signal de sortie d'un capteur d'éthanol (30),
c) sur la base de l'information, ajuster la quantité de combustible délivrée en fonction de la teneur en éthanol.

4. Méthode selon la revendication 3,
**caractérisée par** la quantité de combustible délivrée étant ajustée plus grande pour une teneur en éthanol plus grande que pour une teneur en éthanol plus faible.
